# EUROPEAN PATENT SPECIFICATION

(11) **EP 4 138 176 B1**
(45) Date of publication and mention of the grant of the patent: **20.03.2024**
(21) Application number: 21382762.9
(22) Date of filing: 17.08.2021
(51) Int. Cl.: H01M 10/6557, B60L 58/26, H01M 10/643, H01M 10/6551, H01M 50/213, H01M 50/249, F28F 3/12, H01M 10/617, B60L 50/64, H01M 10/625, F28D 1/03, F28D 1/053, F28F 1/02, F28D 21/00

(54) **HEAT EXCHANGE DEVICE FOR BATTERIES**
WÄRMEAUSTAUSCHVORRICHTUNG FÜR BATTERIEN
DESCRIPTION DE DISPOSITIF D'ÉCHANGE DE CHALEUR POUR BATTERIES

(43) Date of publication of application: 22.02.2023
(73) Proprietor: BORGWARNER EMISSIONS SYSTEMS SPAIN, S.L.U., 36315 Vigo Pontevedra (ES)
(72) Inventor: HERMIDA DOMÍNGUEZ, Xoan Xosé, E-36315 Vigo - Pontevedra (ES); CASTAÑO GONZÁLEZ, Carlos Manuel, E-36315 Vigo - Pontevedra (ES); FONTÁN MARTÍNEZ, Lidia María, E-36204 Vigo - Pontevedra (ES)
(74) Representative: ABG Intellectual Property Law, S.L.

(56) References cited:
- WO-A2-2007/076985
- US-A- 5 318 114
- US-A- 5 517 757
- US-A1- 2007 039 717
- US-A1- 2015 034 287
- US-A1- 2018 205 125

## Description

### OBJECT OF THE INVENTION

The present invention relates to a heat exchange device for batteries, particularly batteries of hybrid or electric vehicles, which allows both dissipating heat from the battery and providing heat to said battery, should it be required, so as to achieve an optimal operation.

The heat exchange device allows being housed between the cells of the battery, occupying minimal space. This is because the thermal fluid is fed to the heat exchange device from only one of its ends, further ensuring a uniform capacity of transmitting heat both in the case of discharge and in the case of heating the cells of the battery along the entire length of the present heat exchange device. Additionally, the present device shows a better pressure drop balance based on its configuration.

Another object of this invention relates to an apparatus formed by the stacking of a plurality of heat exchange devices, which allows the discharge in a distribution of cells also allowing for a high degree of packing and efficiency in the capacity of discharging heat from said cells.

The special configuration of the device makes its structure simpler than those used in the state of the art, facilitating the manufacture thereof, given that the number of different references or components needed for assembly is reduced. The invention has a strong impact on environmental measures against climate change.

### BACKGROUND OF THE INVENTION

One of the fields of the art subject to intense development is the field of batteries for powering hybrid or electric vehicles. Measures against climate change have encouraged a progressive abandonment of internal combustion engines in favor of electric drive vehicles.

The most important limitations of electric drive vehicles when compared with internal combustion vehicles are their reduced autonomy and the longer time needed to charge the batteries when compared with the time for refueling.

Proposals for improving the design of batteries use strategies such as raising the voltage of the battery or the use of designs and coatings of the anode of the load cells which allows the use of higher currents to reduce the total charging time of the battery.

These higher currents and reduced charging time result in the cells being heated, which limits the maximum currents to be used.

Likewise, during use, the raise in temperature as well as the exposure to low temperatures reduce the performance of the load cells, where even conditions which cause the deterioration of said cells may occur.

In order to ensure operating temperature ranges suitable for the operation of the battery, heat exchange elements which allow both providing heat to and discharging it from load cells need to be incorporated.

Heat exchange with components of a battery such as the load cells presents a series of limitations and difficulties which do not take place in the heat exchange occurring in other devices. In addition to the requirements corresponding to space limitation, the presence of elements with an electric charge requires these components to be either electrically isolated or for minimum distances to be ensured in their surrounding area so that arc discharges or discharges due to an inadequate contact do not occur.

Among the heat exchange solutions known in the state of the art there are devices based on conduits through which a thermal fluid flows and which establish a path through the inside of the battery that passes through the elements with which it exchanges heat. The most well-known devices establish a path from a fluid feed point to a fluid discharge point.

These devices establish a path such that the device shares an area where it exchanges heat with load cells, for example through a dielectric element which is in turn a thermal conductor.

These configurations have the disadvantage of presenting a high temperature difference in the coolant along its path, so the same degree of heat exchange with the load cells at all points of the path of the fluid is not ensured.

An alternative to these solutions which use a single path between the thermal fluid feed and discharge point consists of the use of heat exchange devices based on conduits in which the thermal fluid is fed and discharged at the same end, such that said devices enter the group of cells from several points but do not require a connection at the end opposite the end where the thermal fluid is fed and discharged.

US 2015/034287 A1 discloses such a heat exchange device for batteries.

In this type of solution, the complexity of the components which allow changes in direction in the thermal fluid make the product more expensive and require many resources in manufacturing same. Furthermore, the distribution of the thermal fluid between each of them is not suitable given that the hydraulic resistance of each of them in a circuit which establishes a combination of hydraulic resistances in parallel hinders utilizing the capacities of each individual element of the heat exchange device. Likewise, this solution involves a high pressure drop, which is prejudicial to the performance of the heat exchanger device.

The present invention solves the identified problems by means of a device with a low number of parts which facilitates the assembly, and therefore the manufacture, in solutions intended for feeding and discharging thermal fluid at one and the same end, and in the combination of a plurality of these elements also establishes solutions which allow a uniform heat exchange at any of the points where said exchange is required.

### DESCRIPTION OF THE INVENTION

According to the first inventive aspect, the present invention relates to a heat exchange device for batteries comprising:
- *an elongated profile extending according to a longitudinal direction, comprising a plurality of channels for the passage of a heat exchange fluid distributed according to a perpendicular direction relative to the longitudinal direction, the channels being limited between a first plate and a second plate, with the second plate being parallel and arranged opposite the first plate, with the channels being delimited by connection walls extending according to the longitudinal direction, wherein the profile comprises:*
   *at least a first group of channels comprising one or more channels from the channels of the profile, and a second group of channels comprising one or more channels from the channels of the profile other than those of the first group of channels;*
   *a first opening located at a first end of the profile, configured according to a pass-through cut transversely cutting the first group of channels and the second group of channels and leaving at least one connection wall of both ends of the profile according to the perpendicular direction uncut;*
   *a second opening and a third opening located at a second end of the profile, opposite the first end of the profile according to the longitudinal direction, wherein the second opening is configured according to a pass-through cut transversely cutting the first group of channels, and the third opening is configured according to a pass-through cut transversely cutting the second group of channels.*

The profile is the element which has the surfaces through which heat exchange with the elements of the battery takes place. Its elongated configuration, extending along a main direction, allows it to extend through the inside of said battery in order to contact a plurality of elements with which it exchanges heat, preferably the load cells of the battery. According to embodiments of the invention, the elongated element is a profile obtained by extrusion or by hydroforming.

In the case of a profile obtained by extrusion, said profile has a straight initial configuration with the section imposed by the extrusion die, although it does allow for subsequent bending operations which allow configurations adapted to the surfaces with which heat exchange takes place. An example of this configuration is the corrugated configuration, which increases contact with cylindrical load cells in a segment of the outer cylindrical surface thereof.

In one embodiment, the present profile is made of metal, particularly aluminum or steel.

In the case of a profile obtained by means of hydroforming, it is possible to configure the final shape of the profile by means of one or more manufacturing operations.

The profile internally has a plurality of channels which are distributed according to a perpendicular direction relative to the direction in which the profile extends, configuring an outer shape in the form of a "band" which allows being readily adapted to surfaces such as the outer surfaces of the load cells of a battery on one of its sides, or else on the two sides.

The structure of the profile shows a first plate and a second plate spaced from one another such that the channels are located between the first plate and the second plate. The channels are in turn delimited by connection walls. Between two consecutive channels there is an inner connection wall connecting the first plate and the second plate in the transverse direction relative to the direction in which the profile extends, and at the ends of the profile the connection wall is an outer wall also connecting the first plate and the second plate. Both plates are parallel to one another, where parallel is understood to mean that the plates maintain the distance between them, although in the longitudinal direction they show a certain path other than the straight path, the channels thereby having the same dimension in the transverse direction relative to the direction in which the profile extends.

Two groups of channels different from one another, i.e., the group identified as the first group of channels and the group identified as the second group of channels, are distinguished in the profile.

The first group of channels is intended for transporting the thermal fluid in one direction, and the second group of channels is intended for transporting the thermal fluid in the opposite direction. If, for example, the first group of channels transports or conducts the thermal fluid introduced in the heat exchange device by means of a feed inlet, the second group of channels transports or conducts the thermal fluid in the opposite direction to a discharge outlet of said device.

It is possible for the profile to have channels that do not belong to the first group of channels or to the second group of channels, in which the connection walls of these channels still offer a structural function to the profile.

To change the circulation direction of the thermal fluid when the heat exchange device is in the operative mode, the invention requires the presence of openings made on the profile which generate spaces preventing the use of complex parts for forming fluid exchange chambers.

In particular, a first opening is located at a first end of the profile in which this first opening is configured such that a pass-through cut is made, transversely cutting both the first group of channels and the second group of channels.

In this context, where it is indicated throughout the description that a pass-through cut of an opening transversely cuts a channel, it will be interpreted to mean that the cut covers the entire section of the channel even though said cut is not perpendicular to the longitudinal direction, or direction in which the profile extends. The function of an opening of these characteristics is that the channels affected by the cut made on the profile are exposed before reaching the position, according to the longitudinal direction, that they would have if the end of the profile was straight according to a perpendicular direction relative to the longitudinal direction. A free space is thereby generated.

A second opening and third opening are located at the end opposite the end at which the first opening is located. In this case, the second opening cuts the channels of the first group of channels and the third opening cuts the channels of the second group of channels.

In one embodiment, any of the first, second, and third openings can be made by means of laser cutting or from a die cutter, as well as any cutting method which allows making openings having an open or closed profile.

The device further comprises:
- *a deflecting chamber located at the first end of the profile and configured by means of a U-shaped plate attached at least to the first plate and to the second plate, giving rise to a fluid communication chamber between the first group of channels and the second group of channels.*

The first opening is intended for generating a free space which, once closed, defines a chamber that establishes fluidic communication between the channels of the first group and the channels of the second group. When the thermal fluid flowing through the channels of the first group reaches the chamber comprising the space generated by means of the first opening, said thermal fluid is introduced again through the channels of the second group of channels flowing in the reverse direction.

According to the invention, the first opening leaves at least one connection wall at both ends of the profile according to the perpendicular direction relative to the direction in which the profile extends uncut, so on the sides of the profile at least the end connection walls have a larger longitudinal extension which laterally delimits the space generated by the first opening.

The simplicity of the design according to the invention is due to the fact that the generated free space is closed by means of a U-shaped plate attached to the profile. The "branches" or straight positions of the U rest on the first plate and second plate of the profile, thereby closing the space that is not closed by the first plate and second plate, whereas the base of the U closes the chamber at the end of the profile where said U-shaped plate is located, and the walls which have not been affected by the cut made for obtaining the die cut part close the sides of the chamber such that the only communication that one group of channels has is with the other group of channels, i.e., the first group of channels and the second group of channels being communicated with one another.

According to a preferred example of the invention, the U-shaped plate has an expansion which increases the passage section from one group of channels to the other group of channels without affecting the ease of manufacture. According to one embodiment, the expansion in the U-shaped plate is generated by means of a stamping process on the U-shaped plate.

Additionally, the U-shaped plate provides a path for the thermal fluid which reduces the pressure drop in the heat exchange device.

The device further comprises:
- *a first connection conduit and a second connection conduit, both connection conduits being such that:*
   *a first end of both connection conduits is a male configured end;*
   *a second end of both connection conduits is a female configured end, being adapted for being fluidically connected of the first male configured end of a consecutively arranged connection conduit;*
   *wherein both connection conduits:*
- *comprise a window located between the first male configured end and the second female configured end; and*
- *are extended according to a perpendicular direction relative to the first plate and second plate such that the first connection conduit is located in the second opening, and the second connection conduit is located in the third opening;*
*and wherein the window of the first connection conduit is in fluidic communication with the first group of channels and the window of the second connection conduit is in fluidic communication with the second group of channels.*

One of the connection conduits, whether the first connection conduit or the second connection conduit, has the function of feeding thermal fluid to the profile, and the other connection conduit has the function of allowing the discharge of the thermal fluid from the profile.

Thermal fluid flows through a connection conduit to feed the heat exchange device, for example. The connection conduit comprises a window which is in fluidic communication with one of the groups of channels. In the case of feeding, under operating conditions, the thermal fluid passes from the first connection conduit to the first group of channels of the profile. This thermal fluid flows through the first group of channels of the profile until reaching the first end, reaching the chamber of the first end, and from there, it passes on to the second group of channels, lastly flowing through said second group of channels until returning to the second end of the profile. At this second end, it passes on to the second connection conduit through the window of said second connection conduit in order to be discharged.

The configuration of the profile and of its end allows it to enter a battery, exchanging heat with a plurality of elements such as load cells, without needing to have thermal fluid feed and discharge conduits at two points of the battery, with said points being on the same side of the battery.

Furthermore, the compact shape of the chamber of the first end allows not having to reserve much space at all, such that most of the surface of the device is intended for exchanging heat. Additionally, the expansion of the chamber of the first end allows the thermal fluid to be distributed and directed such that the pressure drop in the heat exchange device is lower in relation to known devices.

A male configuration and female configuration of the first connection conduit and second connection conduit allow configuring an apparatus according to a second aspect of the invention.

The apparatus according to this second aspect of the invention comprises a plurality of heat exchange devices such as the one described up until now, wherein:
- *the apparatus is configured as a stack of said devices by means of the connection of the first connection conduits and second connection conduits, with the male configured ends being connected with the female configured ends of the connection device located adjacent thereto;*
   *and wherein*
- *a first plurality of connection conduits interconnected to one another configure a feed conduit of the plurality of devices; and*
- *a second plurality of connection conduits interconnected to one another configure an outlet conduit of the plurality of devices.*

The apparatus according to this second aspect of the invention is formed by a plurality of heat exchange devices such as the one described in the first inventive aspect and according to any of the embodiments described below in reference to the figures. Said heat exchange devices are connected to one another so as to allow heat exchange across a larger extension of a battery, an apparatus like the one indicated thereby being configured. Said connection is performed through the connection of the first connection conduits to one another and the connection of the second connection conduits to one another.

The heat exchange devices of the apparatus are stacked by means of the consecutive connection of the first connection conduits and second connection conduits.

In each device, a connection conduit has the function of feeding thermal fluid to the device and the other connection conduit has the function of discharging the thermal fluid. The consecutive connection of the first feed conduits configures a single conduit which allows feeding all the stacked devices, and the consecutive connection of the second feed conduits configures a single conduit which allows the discharge of thermal fluid from all the stacked devices.

Therefore, the thermal fluid feed conduit and the thermal fluid discharge conduit thus configured run essentially parallel to one another and can be located, for example, outside the group of cells of the battery with which heat is exchanged. Only the plurality of profiles of the heat exchange devices, with their plates exposed and adapted for heat exchange with said cells of the battery, extends inside the cluster of cells to exchange heat with same without the use of additional conduits at the other end of each device being needed for a proper distribution of the thermal fluid.

According to one embodiment, the devices have corrugated profiles, allowing heat exchange with cells that are in thermal contact with one side or/and the other side of each profile of each heat exchanger device.

A third aspect of the invention relates to a battery comprising:
- *a plurality of evenly distributed cells;*
- *an apparatus such as the one described in the second inventive aspect and according to any of the examples described below with the support of the figures,*
*wherein the profiles of the devices of the exchanger apparatus extend between the cells, with said cells being in thermal contact with the profiles either through the first plate or else through the second plate.*

An apparatus with a plurality of profiles corresponding to a plurality of heat exchanger devices is thereby assembled on the even distribution of load cells of a battery. Therefore, by means of thermal contact, said cells are cooled or heated through the heat exchange occurring through the thermal fluid running through the profiles.

In a particular embodiment, the even distribution of load cells of the battery is staggered.

In a particular embodiment, the load cells of the battery are cylindrical, thereby optimizing thermal contact with the first plate, the second plate, or both, of the profile of the heat exchanger device.

### DESCRIPTION OF THE DRAWINGS

These and other features and advantages of the invention will become more apparent from the following detailed description of a preferred embodiment, given only by way of illustrative and non-limiting example in reference to the attached figures.
Figure 1 shows a perspective view of an embodiment of the invention, showing a device in which the profile has a corrugated configuration.
Figure 2 shows a perspective view of a detail of the first end of the device of the same embodiment as the one in Figure 1, in which the U-shaped plate has been removed from said first end to enable observing the details of the first opening.
Figure 3 shows a perspective view of a detail of the specific configuration of the same embodiment of the U-shaped plate as the one shown in Figure 2.
Figure 4 shows a perspective view of a portion of the heat exchange device, the second end of said device, opposite the first, being shown in particular, which allows the first plate as well as the connection conduits to be shown.
Figure 5 shows a perspective view from a point located on the side opposite that of the previous figure in order to see the details of the side opposite that of the profile, the second plate as well as the connection conduits therefore being observed.
Figure 6 shows a perspective view like the one shown in Figure 4 in which one of the connection tubes and the plate which allows the fluidic communication between the windows of the connection tubes and the channels of the profile have been removed in an exploded perspective view so as to allow visual access to the details of the second opening and third opening.
Figure 7 shows the same details of the preceding figure in which the perspective view has been modified so as to allow showing the channels of the first group of channels and the channels of the second group of channels, visually accessible through the second opening and third opening.
Figure 8 shows a perspective view of an apparatus partially assembled by stacking heat exchange devices like the ones shown in Figures 1 to 7.
Figure 9 shows a detail of an embodiment which shows a stacking region of the connection conduits forming either the feed conduit or else the outlet conduit of the thermal fluid, and it likewise depicts the elongated element which is housed in the feed/outlet conduit to allow regulating the flow volume supplied to each heat exchange device.

### DETAILED DISCLOSURE OF THE INVENTION

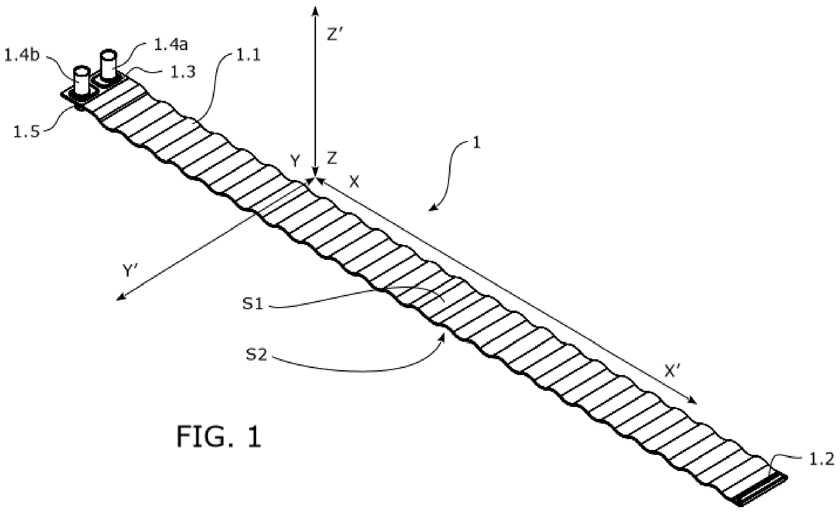

A first inventive aspect relates to a heat exchange device (1) for batteries. Figure 1 shows a perspective view of an embodiment of the device (1), mainly formed by a profile (1.1) having an elongated configuration extending along direction X-X' according to a corrugated path.

The main direction along which the profile (1.1) extends has been identified as longitudinal direction X-X', and the same figure shows a transverse direction relative to longitudinal direction X-X' identified as transverse direction Y-Y'. This transverse direction Y-Y' is the direction presenting the largest transverse dimension of the profile (1.1) given that it is the direction in which the plurality of channels (1.1.1) extends internally.

The same Figure 1 also shows a third transverse direction relative to the two previous directions (X-X', Y-Y') and identified as direction Z-Z', which will be the direction in which a plurality of profiles is stacked, forming a heat exchange apparatus in batteries according to the second aspect of the invention.

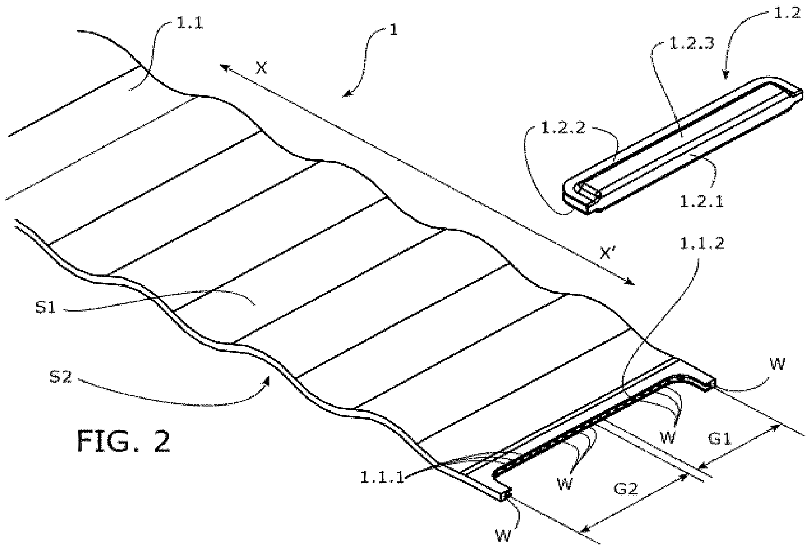

The inside of the profile (1.1) comprises a plurality of channels (1.1.1), shown in Figure 2, which in this embodiment are configured according to the transverse direction Y-Y' in an aligned distribution, extending along the longitudinal direction X-X' and the height thereof being comprised between the first plate (S1) and second plate (S2) of the profile (1.1), according to direction Z-Z'.

Of all the channels (1.1.1) in the profile (1.1), a first group of channels (G1) allows the passage of the thermal fluid through about half of the cross section of the profile (1.1), and a second group of channels (G2) allows the passage of the thermal fluid through about the other half of the cross section of the profile (1.1).

Considering that the fluid introduced in the heat exchange device, particularly in the profile (1.1), circulates through the first group of channels (G1) in the operative mode said fluid reaches a first end of said profile (1.1) and is reintroduced in the second group of channels (G2) of the profile (1.1) again by means of a deflecting chamber (1.2), in order to thus follow the same path in the opposite direction.

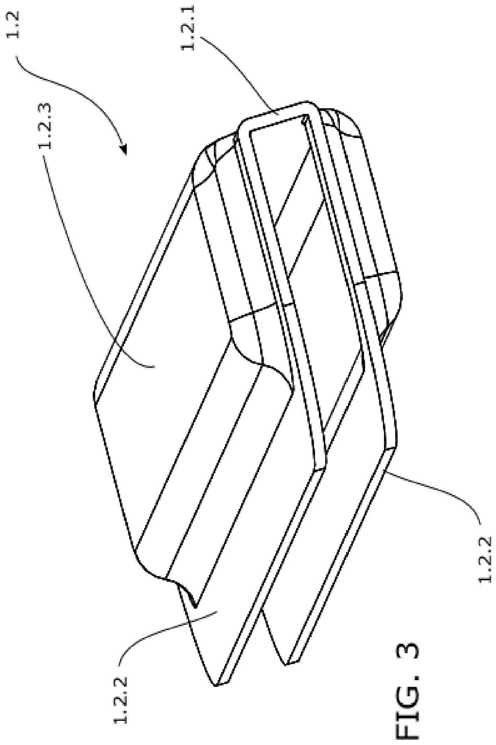

As shown for example in Figures 2 and 3, the deflecting chamber (1.2) according to this embodiment is configured from a die cut metal sheet folded in the form of a U and having a shape obtained by stamping. In one embodiment, the metal plate is made by laser cutting.

According to one embodiment, the profile (1.1) is made of extruded aluminum or steel and according to another embodiment the profile (1.1) is made of either hydroformed steel or aluminum. Additionally, said profile (1.1) can also be made in two halves, configured by means of stamping and attached to one another through any attachment method, particularly by means of welding.

According to any of these examples, stamped elements such as the deflecting chamber (1.2) are attached to the profile (1.1) by means of any attachment method, particularly by means of welding, more particularly by means of brazing, that is, by means of brazing using treated metal sheets which on one side have a certain melting point, and on the opposite side a lower melting point. Once the different parts are assembled, the assembly is subjected to a temperature between the two melting temperatures so that only the material with the lower melting point melts, thereby assuring the attachment of the assembly and at the same time maintaining structural stability. Other suitable forms of attachment that are alternative or complementary to the aforementioned forms include laser welding, gas welding, or a combination thereof.

The inner space of the deflecting chamber (1.2) is formed not only by a plate given its specific configuration, but rather is also due to a first opening (1.1.2) located at the first end of the profile (1.1).

As shown in Figure 1, the profile (1.1) is formed by a first plate (S1) and a second plate (S2) arranged separated from and parallel to one another according to direction Z-Z', with both plates (S1, S2) being connected by a plurality of connection walls (W) giving rise to the plurality of mentioned channels (1.1.1). This configuration gives rise to two surfaces, one opposite the other, intended for facilitating heat exchange with those elements which are in thermal contact with the first plate (S1) or with the second plate (S2), or both (S1, S2).

Again, in Figure 2, the first opening (1.1.2) present at the first end of the profile (1.1) according to this embodiment is due to a die cutting operation according to the perpendicular direction relative to the plates (S1, S2) and along a cutting path which, in this case, is open. Particularly, it is open because at the end of the profile (1.1), it originates from the first plate (S1) reaching the opposite end of the profile (1.1), in the second plate (S2), and leaving at least the connection walls (W) of the sides of the profile (1.1) on both sides of the profile (1.1) according to the transverse direction Y-Y'. Other openings that can be made by cutting will be described below; they can particularly be configured by die cutting, laser cutting, or any other cutting method which allows making openings having an open or closed profile. The advantage of making the openings needed in the profile (1.1) by die cutting is that all of them can be generated in a single cutting operation.

The result of the presence of a first opening (1.1.2) is an offset space at the first end of the profile (1.1), which is subsequently closed by the U-shaped plate of the deflecting chamber (1.2).

The deflecting chamber (1.2) is attached to the first plate (S1) and to the second plate (S2) of the profile (1.1) at least in a perimetral region (1.2.2) of the deflecting chamber (1.2).

The deflecting chamber (1.2) also shows the base (1.2.1) of the U, which gives rise in this embodiment to the wall of the final end of the device (1).

In this embodiment, the deflecting chamber (1.2) shows an expansion (1.2.3) which increases the passage section for the passage of the thermal fluid on its path from the first group of channels (G1) towards the second group of channels (G2).

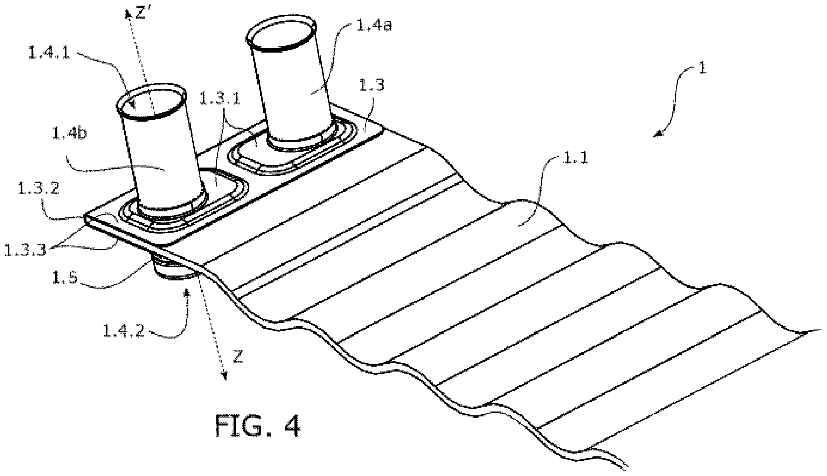

Figure 4 shows a perspective view of the opposite end of the profile (1.1), referred to as second end of the profile (1.1), where the feed of the thermal fluid and also the discharge of the thermal fluid circulating through the profile (1.1), particularly through the first group of channels (G1) and second group of channels (G2) established in the profile (1.1), are established.

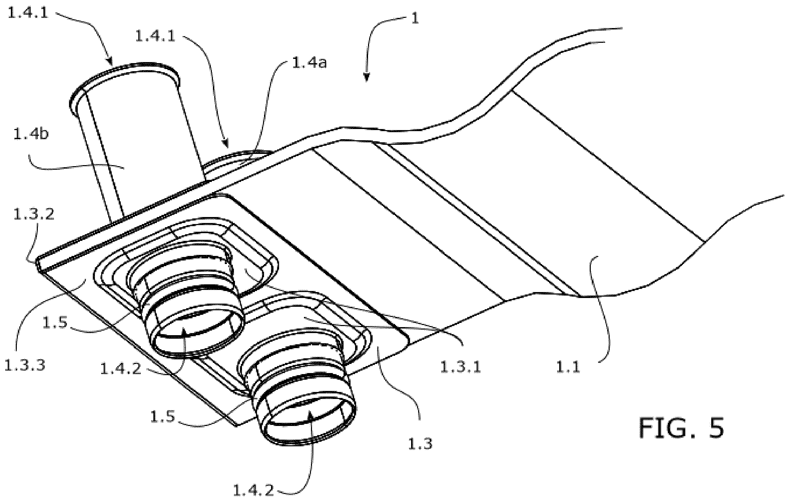

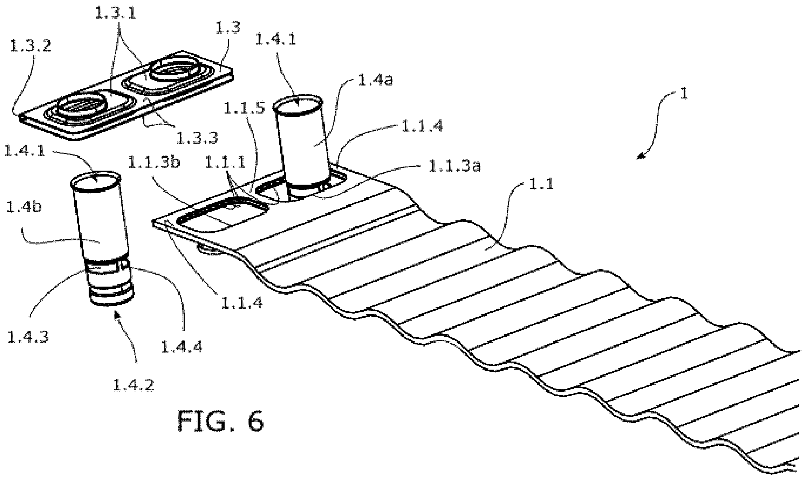

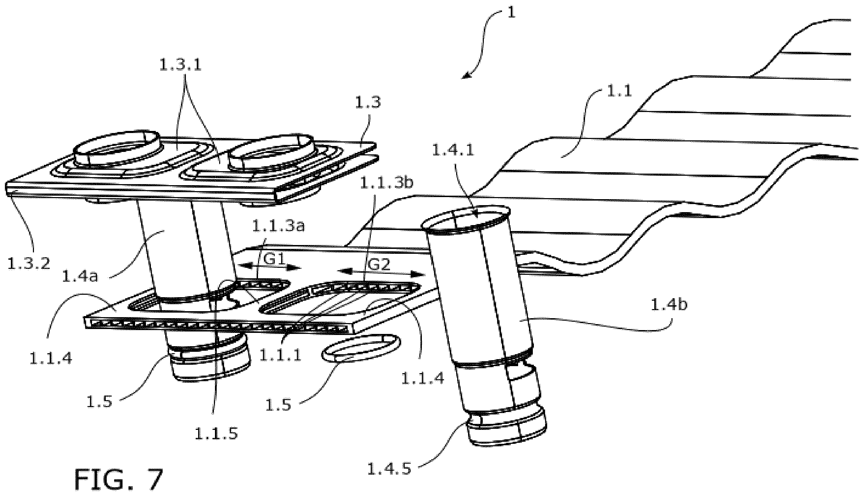

This figure is completed with the bottom view of Figure 5 as well as with the views shown in Figures 6 and 7, respectively, where in these last two figures some parts have been removed or shifted out of their position in the device (1) so as to allow having visual access to the inside of the internally configured chambers.

In this embodiment shown in Figure 4, and also in Figure 1, the thermal fluid is introduced by means of a first connection conduit (1.4a), and the thermal fluid is discharged by means of a second connection conduit (1.4b). Although the position of the first connection conduit (1.4a) and second connection conduit (1.4b) corresponds to that shown in the mentioned figures, the function of both connection conduits (1.4a, 1.4b) is interchangeable, such that according to a second alternative, the thermal fluid is fed and discharged in the reverse manner.

At its second end, the profile (1.1) presents a second opening (1.1.3a) and a third opening (1.1.3b), both openings (1.1.3a, 1.1.3b) having a closed configuration, as observed in Figure 6. An alternative example not shown in the figures has the second opening (1.1.3a) being open, the third opening (1.1.3b) being open, or both openings (1.1.3a, 1.1.3b) being open. An open opening is understood as one in which the cutting path giving rise to the opening starts and ends at the end of the profile (1.1) or even on one side of the profile (1.1).

In these examples shown in the present figures, the closed recess forming the opening at the end of the profile (1.1) is closed by means of the U-shaped plate forming the distribution chamber (1.3).

In a particular embodiment, the distribution chamber (1.3) is configured by means of two independent plates for each group of channels (G1, G2); therefore, there are two independent and analogue distribution chambers, each one configured by means of a U-shaped plate covering at least one of the groups of channels (G1, G2).

According to this embodiment, the second opening (1.1.3a) and the third opening (1.1.3b) are spaced from one another, such that at least one connection wall (W) of the inside of the profile (1.1) is not sectioned or cut, so it is not part of the path of either of the openings (1.1.3a, 1.1.3b), with a physical barrier to the thermal fluid thereby being established, such that said thermal fluid cannot pass from one group of channels to the other group of channels in the area where the cut corresponding to the mentioned openings (1.1.3a, 1.1.3b) has been made.

According to other embodiments, this barrier in the form of a connection wall (W) interposed between the spaces which generate the second opening and third opening (1.1.3a, 1.1.3b) can be larger, even being formed by one or more channels (1.1.1) that do not belong to the first group of channels (G1) or to the second group of channels (G2).

According to the embodiment shown in the present figures, the second opening (1.1.3a) is limited on a first side by at least one connection wall (W) which reaches the second end of the profile (1.1), and the third opening (1.1.3b) is limited on a second side, opposite the first side according to the transverse direction (Y-Y'), by at least one connection wall (W) which reaches the second end of the profile (1.1). Additionally, the second opening (1.1.3a) and the third opening (1.1.3b) are provided between same with at least one connection wall (W) located between both openings (1.1.3a, 1.1.3b).

The first connection conduit (1.4a) and the second connection conduit (1.4b), located at the second end of the profile (1.1), in turn comprise a window (1.4.3), which allows the passage of the thermal fluid between the inside of said connection conduits (1.4a, 1.4b) and the inside of the channels (1.1.1) of the profile (1.1), with which they are in fluidic communication, particularly with the inside of the first group of channels (G1) or of the second group of channels (G2) as corresponds to each connection conduit (1.4a, 1.4b).

If these windows (1.4.3) are very large, they can weaken the connection conduit (1.4a, 1.4b) at least during the assembly operation since after being attached to the remaining parts, the welds can form a sufficiently strong assembly. According to one embodiment, the window (1.4.3) has one or more reinforcement segments (1.4.4), which in turn allows dividing the window (1.4.3) into two or more openings, that is, two or more spaces which are configured as windows for the passage of the flow from a smaller passage section to the mentioned window (1.4.3).

Likewise, the connection conduits (1.4a, 1.4b) comprise a male end (1.4.2) and a female end (1.4.1) adapted for being coupled to the male end (1.4.2) of a connection conduit (1.4a, 1.4b) of a device (1) located adjacent thereto, thereby allowing a stacked attachment of devices (1) through the connection of the connection conduits (1.4a, 1.4b). This stacked attachment does not mean that the profiles (1.1) are stacked, but rather that the consecutive attachment of the connection conduits (1.4a, 1.4b) gives rise to a distribution of the profiles (1.1) such that the latter are spaced from one another and also parallel to one another, attached based on said connection conduits (1.4a, 1.4b).

In one embodiment, and based on the present configuration of the connection conduits (1.4a, 1.4b), at least one reinforcement segment (1.4.4) of the window (1.4.3) is located between one point of the end located in the male conduit (1.4.2) and one point located in the female conduit (1.4.1).

The fluidic communication between each of the windows (1.4.3) and the corresponding channels (1.1.1) thereof can be carried out directly. However, according to this preferred embodiment, said fluidic communication between each of the windows (1.4.3) of the connection conduits (1.4a, 1.4b) and the corresponding channels (1.1.1) is not carried out directly, but rather as shown particularly in Figures 4 to 7, is established through intermediate chambers.

That is, the window (1.4.3) of the first connection conduit (1.4a), the window (1.4.3) of the second connection conduit (1.4b), or the window (1.4.3) of both connection conduits (1.4a, 1.4b) is/are in fluidic communication with the corresponding group of channels (G1, G2) by means of a distribution chamber (1.3) located at the second end of the profile (1.1) and configured by means of a U-shaped plate.

This U-shaped plate which generates said distribution chamber (1.3) is attached at least to the first plate (S1) and to the second plate (S2), giving rise to a fluidic communication space between each connection conduit (1.4a, 1.4b) and the group of channels (G1, G2) corresponding to same.

This U-shaped part allows for an insertion, for example according to longitudinal direction X-X', at the second end of the profile (1.1), with the same part (1.3) thereby defining two intermediate fluidic chambers, one for the connection conduit (1.4a), giving rise to the feed of the thermal fluid to the corresponding channels (1.1.1) of the profile (1.1), and another one for the connection conduit (1.4b), allowing the discharge of the thermal fluid from the corresponding channels (1.1.1) of the profile (1.1).

Even where these two intermediate chambers are defined, once the U-shaped part, referred to as distribution chamber (1.3), is inserted, said U-shaped part presents openings through which the insertion of the connection conduits (1.4a, 1.4b) is possible.

In a particular embodiment, the distribution chamber (1.3) is configured by two independent U-shaped plates, each one inserted in and in communication with one of the connection conduits (1.4a, 1.4b).

According to these embodiments, the distribution chamber (1.3) has an expansion (1.3.1) which increases the passage section between the window (1.4.3) of the connection conduit (1.4a, 1.4b) and the inlet/outlet of the thermal fluid relative to the group of channels (G1, G2) with which said window (1.4.3) is fluidically connected. This expansion (1.3.1) is located in each connection conduit (1.4a, 1.4b); therefore, there are two expansions (1.3.1).

According to some embodiments, the expansion (1.2.3) of the deflecting chamber (1.2), the expansion (1.3.1) of the distribution chamber (1.3), or both expansions (1.2.3, 1.3.1) are oriented towards the side on which the first plate (S1) is located, the side on which the second plate (S2) is located, or towards both sides.

In one embodiment, the male end (1.4.2) of the connection conduit (1.4a, 1.4b) comprises a perimetral groove for housing an O-ring (1.5) so as to ensure tightness in the mutual connection between the male end (1.4.2) and the female end (1.4.1) of the connection tubes (1.4a, 1.4b) of adjacent heat exchange devices (1).

In one embodiment, the female end (1.4.1) of the connection conduit (1.4a, 1.4b) comprises a perimetral groove on its inner surface for housing an O-ring (1.5), so as to ensure tightness in the mutual connection between the male end (1.4.2) and the female end (1.4.1) of the connection tubes (1.4a, 1.4b) of adjacent heat exchange devices (1).

In the examples shown in the present figures, the profile (1.1) shows a corrugation according to longitudinal direction X-X', configured for being adapted to the outer surface of a plurality of cells (C) of a battery, with said cells (C) being cylindrically configured.

This configuration allows a segment of the surface of the profile (1.1) to be adapted to the outer surface of the cylindrical cell (C), preferably by means of a corrugation which is formed by cylindrical sectors counter to the outer cylindrical configuration of the cell (C) such that heat transfer between the cell (C) and the profile (1.1) is improved. The heat exchanged with the profile (1.1) is in turn transferred to or from the thermal fluid for an efficient heat transfer.

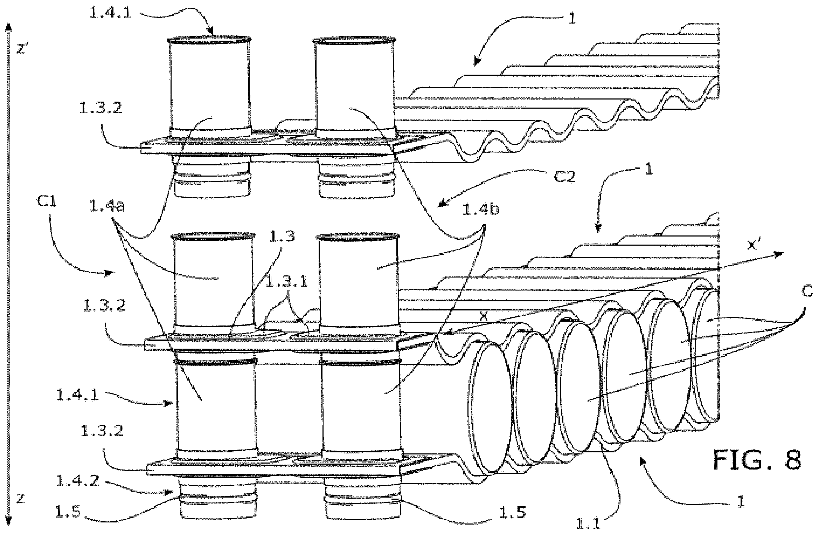

Figure 8 shows a heat exchanger apparatus for a battery comprising a plurality of heat exchange devices (1) according to any of the examples described above, intended for exchanging heat with a plurality of cells (C), preferably with all the cells (C) of a battery.

As shown in Figure 8, the apparatus is configured as a stack of said devices (1) by means of the connection of the first connection conduits and second connection conduits (1.4a, 1.4b), with the male configured ends (1.4.2) being connected with the female configured ends (1.4.1) of the connection conduit (1.4a, 1.4b) located adjacent thereto. The profiles (1.1) of each device extend parallel according to direction X-X', allowing for example the heat exchange with an alignment of cells (C), and the connection conduits (1.4a, 1.4b) are distributed consecutively in perpendicular direction Z-Z'.

In this manner, a first plurality of connection conduits (1.4a, 1.4b) interconnected to one another configure a feed conduit (C1) for feeding the thermal fluid to the plurality of devices (1); and a second plurality of connection conduits (1.4a, 1.4b) interconnected to one another configure an outlet conduit (C2) for the outlet of thermal fluid from the plurality of devices (1).

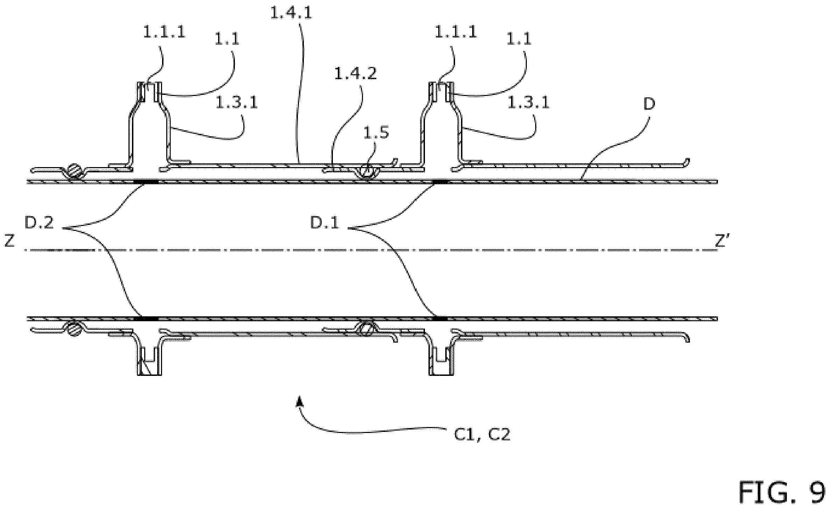

Figure 9 shows a section of one of the conduits in one embodiment, either the feed conduit (C1) or else the outlet conduit (C2), for the inlet or discharge of the thermal fluid, respectively, into/from the heat exchange devices (1).

This section present in Figure 9 shows the connection between the male end (1.4.2) and the female end (1.4.1) of each connection conduit (1.4a, 1.4b) with the conduit adjacent thereto, with the intermediation of the O-ring (1.5) in said connection ensuring the tightness of the connections.

A main thermal fluid feed connection not shown in the figures feeds the feed conduit (C1) thus configured, therefore allowing each of the devices (1) to be fed through each of the windows (1.4.3) of the corresponding connection conduit (1.4a, 1.4b), and a main thermal fluid outlet connection (C2) not shown in the figures allows the discharge of the thermal fluid coming from each device (1) also discharged through the windows (1.4.3) of the corresponding connection conduit (1.4a, 1.4b).

According to one embodiment, direct communication between each device (1) and the main thermal fluid feed or outlet gives rise to an uneven thermal fluid distribution, which causes the devices (1) at the beginning of the stack to have a different flow relative to the flow of the devices (1) located at the end of the stack.

To prevent this difference of flows according to the position of the different devices (1) of the stack, according to one embodiment there is an elongated element (D) housed inside the feed conduit (C1), inside the outlet conduit (C2), or in both conduits (C1, C2).

According to this embodiment, the elongated element (D) is configured for being housed and oriented in the conduit (C1, C2) and comprises either a slot or else a plurality of windows (D.1, D.2) with an increasing/decreasing aperture area according to the longitudinal direction of the conduit (C1, C2), with a different passage section for the passage of a heat exchange fluid thereby being established for each device (1). The flow of the thermal fluid in each of the devices (1) is thereby allowed to be adjusted according to the position of said device (1) in the stack, causing each of said devices (1) to correspond with the suitable passage section of the elongated element (D).

In this embodiment, the elongated element (D) is housed in the conduit (C1, C2), being oriented such that either a slot or else a plurality of windows (D.1, D.2) with an increasing/decreasing aperture area according to the longitudinal direction of the conduit (C1, C2), and therefore, the defined fluid passage section, is aligned with each of the corresponding devices (1).

In a particular embodiment, the elongated element (D) is fixed to the inner wall of the conduit (C1, C2).

In a particular embodiment, the elongated element (D) has the same passage section for a group of devices (1), based on the position of each of the devices (1) within the stack.

Figure 9 schematically shows by means of black rectangles windows (D.1, D.2) with a different size for one device (1) and for the following device (1) of the stack forming the heat exchange apparatus.

Figure 9 shows a conduit (C1, C2), for example a feed conduit, in which there is a pressure drop according to its axial direction and with a higher pressure in the device (1) on the right with respect to the adjacent device (1) shown on the left. The windows (D1) of the device (1) on the right are shown with a smaller size than the windows (D2) of the device (1) of the left, thereby compensating for the difference in pressures with which the devices (1) are fed, therefore using smaller windows in the area where the pressure with which a device (1) is fed is higher than in the area where the other device (1) is located. The flow in both devices (1) being approximately equal is thereby achieved by compensating for the difference in pressures existing in adjacent devices (1) of the stack.

According to one embodiment, the elongated element (D) is a tubular conduit comprising a plurality of windows (D1, D2) with an increasing/decreasing window size according to the axial direction of the elongated element (D).

According to another embodiment, the elongated element (D) is a tubular conduit with a slot having an increasing/decreasing width according to the axial direction of the elongated element (D). According to an even more specific example, the slot extends along the entire length of the elongated element such that the surface of the elongated element is configured by a plate with an open cylindrical sector, that is, with a C-shaped section.

According to another embodiment, according to any of the examples of the elongated element (D) described above, the general configuration of said elongated element (D), either with windows (D1, D2) or else with slot, is conical, giving rise to a narrowing or expansion of the section thereof according to its axial direction.

According to a third aspect of the invention, an embodiment not shown in the figures is a battery comprising:
- a plurality of evenly distributed cells (C);
- an apparatus according to any of the examples described above;
wherein the profiles (1.1) of the devices (1) of the exchanger apparatus extend between the cells (C), with said cells being in thermal contact with the profiles (1.1) either through the first plate (S1) or else through the second plate (S2) or else through both (S1, S2).

According to a preferred example, thermal contact is carried out through a laminar element interposed between the profile (1.1), particularly between the first plate (S1), the second plate (S2), or both (S1, S2), and each of the cells (C) of the battery, with said laminar element being one or more elements with specific dielectric and thermal properties.

According to another embodiment, the cells (C) are distributed in a staggered manner, giving rise to a high degree of packing of the battery, and the profiles (1.1) of the devices (1) are corrugated, being adapted to the configuration of the cells (C) located on both sides of each profile (1.1).

## Claims

1. A heat exchange device (1) for batteries, comprising:
- an elongated profile (1.1) extending according to a longitudinal direction (X-X'), comprising a plurality of channels (1.1.1) for the passage of a heat exchange fluid distributed according to a perpendicular direction (Y-Y') relative to the longitudinal direction (X-X'), the channels (1.1.1) being limited between a first plate (S1) and a second plate (S2), with the second plate (S2) being parallel to and arranged opposite the first plate (S1), with the channels (1.1.1) being delimited by connection walls (W) extending according to the longitudinal direction (X-X'), wherein the profile (1.1) comprises:
at least a first group of channels (G1) comprising one or more channels from the channels (1.1.1) of the profile (1.1), and a second group of channels (G2) comprising one or more channels from the channels (1.1.1) of the profile (1.1) other than those of the first group of channels (G1);
a first opening (1.1.2) located at a first end of the profile (1.1), configured according to a pass-through cut transversely cutting the first group of channels (G1) and the second group of channels (G2) and leaving at least one connection wall (W) at both ends of the profile (1.1) according to the perpendicular direction (Y-Y') uncut;
a second opening (1.1.3a) and a third opening (1.1.3b) located at a second end of the profile (1.1), opposite the first end of the profile (1.1) according to the longitudinal direction (X-X'), wherein the second opening (1.1.3a) is configured according to a pass-through cut transversely cutting the first group of channels (G1), and the third opening (1.1.3b) is configured according to a pass-through cut transversely cutting the second group of channels (G2);
- a deflecting chamber (1.2) located at the first end of the profile (1.1) and configured by means of a U-shaped plate attached at least to the first plate (S1) and to the second plate (S2), giving rise to a fluid communication chamber between the first group of channels (G1) and the second group of channels (G2);
- a first connection conduit (1.4a) and a second connection conduit (1.4b), both connection conduits (1.4a, 1.4b) being such that:
a first end of both connection conduits (1.4a, 1.4b) is a male configured end (1.4.2);
a second end of both connection conduits (1.4a, 1.4b) is a female configured end (1.4.1), being adapted for being fluidically connected at the first male configured end (1.4.2) of a consecutively arranged connection conduit (1.4a, 1.4b);
wherein both connection conduits (1.4a, 1.4b):
- comprise a window (1.4.3) located between the first male configured end (1.4.2) and the second female configured end (1.4.1); and
- are extended according to a perpendicular direction (Z-Z') relative to the first plate (S1) and second plate (S2) such that the first connection conduit (1.4a) is located in the second opening (1.1.3a), and the second connection conduit (1.4b) is located in the third opening (1.1.3b);
and wherein the window (1.4.3) of the first connection conduit (1.4a) is in fluidic communication with the first group of channels (G1) and the window (1.4.3) of the second connection conduit (1.4b) is in fluidic communication with the second group of channels (G2).

2. The device according to claim 1, wherein the second opening (1.1.3a) is limited on a first side by at least one connection wall (W) which reaches the second end of the profile (1.1), the third opening (1.1.3b) is limited on a second side, opposite the first side according to the perpendicular direction (Y-Y'), by at least one connection wall (W) which reaches the second end of the profile (1.1), and the second opening (1.1.3a) and the third opening (1.1.3b) are provided between same with at least one connection wall (W) located between both openings (1.1.3a, 1.1.3b).

3. The device according to claim 1 or 2, wherein the window (1.4.3) of the first connection conduit (1.4a), the window (1.4.3) of the second connection conduit (1.4b), or the window (1.4.3) of both connection conduits (1.4a, 1.4b) is/are in fluidic communication with the corresponding group of channels (G1, G2) by means of a distribution chamber (1.3) located at the second end of the profile (1.1) and configured by means of a U-shaped plate, being attached at least to the first plate (S1) and to the second plate (S2), giving rise to a fluidic communication space between each connection conduit (1.4a, 1.4b) of the group of channels (G1, G2) corresponding to same.

4. The device according to any of the preceding claims, wherein the plate configuring the deflecting chamber (1.2) has an expansion (1.2.3) which increases the passage section for the passage of a fluid between the first group of channels (G1) and the second group of channels (G2).

5. The device according to any of the preceding claims, wherein the distribution chamber (1.3) has an expansion (1.3.1) which increases the passage section between the window (1.4.3) of the connection conduit (1.4a, 1.4b) and the inlet for the entry of the exchange fluid into the group of channels (G1, G2) with which said window (1.4.3) is fluidically connected.

6. The device according to claim 4 or 5, wherein the expansion (1.2.3) of the deflecting chamber (1.2), the expansion (1.3.1) of the distribution chamber (1.3), or both expansions (1.2.3, 1.3.1) are oriented towards the side on which the first plate (S1) is located, the side on which the second plate (S2) is located, or towards both sides.

7. The device according to any of claims 1 to 6, wherein the second opening (1.1.3a), the third opening (1.1.3b), or both openings (1.1.3a, 1.1.3b) configure a window according to a closed path cut in the profile (1.1).

8. The device according to claim 3 and any of claims 4 to 7, wherein the second opening and/or the third opening (1.1.3a, 1.1.3b) configure a recess according to an open path cut in the profile (1.1), with the space generated by the recess being closed at the end of the profile (1.1) by means of the U-shaped plate forming the distribution chamber (1.3).

9. The device according to any of the preceding claims, wherein the window (1.4.3) of any of the connection conduits (1.4a, 1.4b) comprises at least one reinforcement segment (1.4.4) between a point located in the male conduit (1.4.2) and a point located in the female conduit (1.4.1), with the window being divided into two or more openings.

10. The device according to any of the preceding claims, wherein the profile (1.1) shows a corrugation according to longitudinal direction X-X', configured for being adapted to the outer surface of a plurality of cylindrically configured battery cells (C).

11. A heat exchanger apparatus for a battery, comprising a plurality of heat exchange devices (1) according to any of the preceding claims wherein:
- the apparatus is configured as a stack of said devices (1) by means of the connection of the first connection conduits (1.4a) and second connection conduits (1.4b), with the male configured ends (1.4.2) being connected with the female configured ends (1.4.1) of the connection conduit (1.4a, 1.4b) located adjacent thereto;
and wherein
- a first plurality of connection conduits (1.4a, 1.4b) interconnected to one another configure a feed conduit (C1) of the plurality of devices (1); and
- a second plurality of connection conduits (1.4a, 1.4b) interconnected to one another configure an outlet conduit (C2) of the plurality of devices (1).

12. The apparatus according to claim 11, wherein the feed conduit (C1), the outlet conduit (C2), or both conduits (C1, C2) comprise at least one elongated element (D) configured for being housed and oriented in the conduit (C1, C2) and comprising either one or more slots or else a plurality of windows (D.1, D.2) with an increasing/decreasing aperture area according to the longitudinal direction of the conduit (C1, C2), with a different passage section for the passage of a heat exchange fluid being established for each device (1) so as to adjust the flow of the fluid in each device (1) according to the position of said device (1) in the stack.

13. The apparatus according to claim 12, wherein the elongated element (D) is either a tube or else a cone or cone frustum.

14. The apparatus according to claim 12 or 13, wherein the elongated element (D) is a plate with a C-shaped section.

15. A battery comprising:
- a plurality of evenly distributed cells (C);
- an apparatus according to any of claims 11 to 14;
wherein the profiles (1.1) of the devices (1) of the exchanger apparatus extend between the cells (C), with said cells being in thermal contact with the profiles (1.1) either through the first plate (S1) or else through the second plate (S2) or else through both (S1, S2).

## Patentansprüche

1. Wärmeaustauschvorrichtung (1) für Batterien, die aufweist:
- ein längliches Profil (1.1), das sich gemäß einer Längsrichtung (X-X') erstreckt, das mehrere Kanäle (1.1.1) für den Durchgang eines Wärmeaustauschfluids aufweist, die gemäß einer senkrechten Richtung (Y-Y') relativ zur Längsrichtung (X-X') verteilt sind, wobei die Kanäle (1.1.1) zwischen einer ersten Platte (S1) und einer zweiten Platte (S2) begrenzt sind, wobei die zweite Platte (S2) parallel zur ersten Platte (S1) und dieser gegenüberliegend angeordnet ist, wobei die Kanäle (1.1.1) durch Verbindungswände (W) begrenzt sind, die sich gemäß der Längsrichtung (X-X') erstrecken, wobei das Profil (1.1) aufweist:
mindestens eine erste Gruppe von Kanälen (G1), die einen oder mehrere Kanäle aus den Kanälen (1.1.1) des Profils (1.1) aufweist, und eine zweite Gruppe von Kanälen (G2), die einen oder mehrere Kanäle aus den Kanälen (1.1.1) des Profils (1.1) aufweist, die sich von denen der ersten Gruppe von Kanälen (G1) unterscheiden;
eine erste Öffnung (1.1.2), die sich an einem ersten Ende des Profils (1.1) befindet und gemäß einem Durchgangsschnitt konfiguriert ist, der die erste Gruppe von Kanälen (G1) und die zweite Gruppe von Kanälen (G2) transversal schneidet und mindestens eine Verbindungswand (W) an beiden Enden des Profils (1.1) gemäß der senkrechten Richtung (Y-Y') ungeschnitten lässt;
eine zweite Öffnung (1.1.3a) und eine dritte Öffnung (1.1.3b), die sich an einem zweiten Ende des Profils (1.1) befinden, das dem ersten Ende des Profils (1.1) in der Längsrichtung (X-X') gegenüberliegt, wobei die zweite Öffnung (1.1.3a) gemäß einem Durchgangsschnitt konfiguriert ist, der die erste Gruppe von Kanälen (G1) transversal schneidet, und die dritte Öffnung (1.1.3b) gemäß einem Durchgangsschnitt konfiguriert ist, der die zweite Gruppe von Kanälen (G2) transversal schneidet,
- eine Umlenkkammer (1.2), die sich am ersten Ende des Profils (1.1) befindet und mittels einer U-förmigen Platte konfiguriert ist, die mindestens an der ersten Platte (S1) und an der zweiten Platte (S2) befestigt ist, wodurch eine Fluidverbindungskammer zwischen der ersten Gruppe von Kanälen (G1) und der zweiten Gruppe von Kanälen (G2) entsteht,
- eine erste Verbindungsleitung (1.4a) und eine zweite Verbindungsleitung (1.4b), wobei beide Verbindungsleitungen (1.4a, 1.4b) so beschaffen sind, dass:
ein erstes Ende der beiden Verbindungsleitungen (1.4a, 1.4b) ein als Stecker konfiguriertes Ende (1.4.2) ist,
ein zweites Ende der beiden Verbindungsleitungen (1.4a, 1.4b) ein als Buchse konfiguriertes Ende (1.4.1) ist, das eingerichtet ist, mit dem ersten als Stecker konfigurierten Ende (1.4.2) einer aufeinanderfolgend angeordneten
Verbindungsleitung (1.4a, 1.4b) fluidisch verbunden zu werden; wobei die beiden Verbindungsleitungen (1.4a, 1.4b):
- ein Fenster (1.4.3) aufweisen das sich zwischen dem ersten als Stecker konfigurierten Ende (1.4.2) und dem zweiten als Buchse konfigurierten Ende (1.4.1) befindet, und
- sich gemäß einer senkrechten Richtung (Z-Z') relativ zur ersten Platte (S1) und zur zweiten Platte (S2) erstrecken, so dass sich die erste Verbindungsleitung (1.4a) in der zweiten Öffnung (1.1.3a) und die zweite Verbindungsleitung (1.4b) in der dritten Öffnung (1.1.3b) befindet;
und wobei das Fenster (1.4.3) der ersten Verbindungsleitung (1.4a) in Fluidverbindung mit der ersten Gruppe von Kanälen (G1) steht und das Fenster (1.4.3) der zweiten Verbindungsleitung (1.4b) in Fluidverbindung mit der zweiten Gruppe von Kanälen (G2) steht.

2. Vorrichtung nach Anspruch 1, wobei die zweite Öffnung (1.1.3a) auf einer ersten Seite durch mindestens eine Verbindungswand (W) begrenzt ist, die das zweite Ende des Profils (1.1) erreicht, die dritte Öffnung (1.1.3b) auf einer zweiten, der ersten Seite gemäß der senkrechten Richtung (Y-Y') gegenüberliegenden Seite durch mindestens eine Verbindungswand (W) begrenzt ist, die bis zum zweiten Ende des Profils (1.1) reicht, und die zweite Öffnung (1.1.3a) und die dritte Öffnung (1.1.3b) dazwischen mit mindestens einer zwischen den beiden Öffnungen (1.1.3a, 1.1.3b) liegenden Verbindungswand (W) versehen sind.

3. Vorrichtung nach Anspruch 1 oder 2, wobei das Fenster (1.4.3) der ersten Verbindungsleitung (1.4a), das Fenster (1.4.3) der zweiten Verbindungsleitung (1.4b) oder das Fenster (1.4.3) beider Verbindungsleitungen (1.4a, 1.4b) mit der entsprechenden Gruppe von Kanälen (G1, G2) mittels einer Verteilerkammer (1.3) in Fluidverbindung steht, die sich am zweiten Ende des Profils (1.1) befindet und mittels einer U-förmigen Platte konfiguriert ist, die mindestens an der ersten Platte (S1) und an der zweiten Platte (S2) befestigt ist, wodurch ein Fluidverbindungsraum zwischen jeder Verbindungsleitung (1.4a, 1.4b) der Gruppe von Kanälen (G1, G2) entsteht, die dieser entsprechen.

4. Vorrichtung nach einem der vorhergehenden Ansprüche, wobei die Platte, die die Umlenkkammer (1.2) konfiguriert, eine Erweiterung (1.2.3) aufweist, die den Durchgangsquerschnitt für den Durchgang eines Fluids zwischen der ersten Gruppe von Kanälen (G1) und der zweiten Gruppe von Kanälen (G2) vergrößert.

5. Vorrichtung nach einem der vorhergehenden Ansprüche, wobei die Verteilerkammer (1.3) eine Erweiterung (1.3.1) aufweist, die den Durchgangsquerschnitt zwischen dem Fenster (1.4.3) der Verbindungsleitung (1.4a, 1.4b) und dem Einlass für den Eintritt des Austauschfluids in die Gruppe von Kanälen (G1, G2) vergrößert, mit der das Fenster (1.4.3) fluidisch verbunden ist,

6. Vorrichtung nach Anspruch 4 oder 5, wobei die Erweiterung (1.2.3) der Umlenkkammer (1.2), die Erweiterung (1.3.1) der Verteilerkammer (1.3) oder beide Erweiterungen (1.2.3, 1.3.1) zu der Seite, auf der sich die erste Platte (S1) befindet, zu der Seite, auf der sich die zweite Platte (S2) befindet, oder zu beiden Seiten ausgerichtet sind.

7. Vorrichtung nach einem der Ansprüche 1 bis 6, wobei die zweite Öffnung (1.1.3a), die dritte Öffnung (1.1.3b) oder beide Öffnungen (1.1.3a, 1.1.3b) ein Fenster gemäß einem geschlossenen, in das Profil (1.1) geschnittenen Weg konfigurieren.

8. Vorrichtung nach Anspruch 3 und einem der Ansprüche 4 bis 7, wobei die zweite Öffnung und/oder die dritte Öffnung (1.1.3a, 1.1.3b) eine Aussparung entsprechend einem in das Profil (1.1) geschnittenen offenen Weg konfigurieren, wobei der durch die Aussparung erzeugte Raum am Ende des Profils (1.1) mittels der U-förmigen Platte verschlossen ist, die die Verteilerkammer (1.3) bildet.

9. Vorrichtung nach einem der vorhergehenden Ansprüche, wobei das Fenster (1.4.3) einer der Verbindungsleitungen (1.4a, 1.4b) mindestens ein Verstärkungssegment (1.4.4) zwischen einem Punkt in der Steckerleitung (1.4.2) und einem Punkt in der Buchsenleitung (1.4.1) aufweist, wobei das Fenster in zwei oder mehr Öffnungen unterteilt ist.

10. Vorrichtung nach einem der vorhergehenden Ansprüche, wobei das Profil (1.1) eine Riffelung gemäß der Längsrichtung X-X' aufweist, die so konfiguriert ist, dass sie an die Außenfläche mehrerer zylindrisch konfigurierter Batteriezellen (C) angepasst ist.

11. Wärmetauschervorrichtung für eine Batterie, die mehrere Wärmeaustauschvorrichtungen (1) nach einem der vorhergehenden Ansprüche aufweist, wobei:
die Vorrichtung mittels der Verbindung der ersten Verbindungsleitungen (1.4a) und der zweiten (1.4b) Verbindungsleitungen als Stapel der Vorrichtungen (1) konfiguriert ist, wobei die als Stecker konfigurierten Enden (1.4.2) mit den als Buchse konfigurierten Enden (1.4.1) der dazu
benachbarten Verbindungsleitung (1.4a, 1.4b) verbunden sind, und wobei
mehrere erste Verbindungsleitungen (1.4a, 1.4b), die miteinander verbunden sind, eine Zuführungsleitung (C1) der mehreren Vorrichtungen (1) konfigurieren, und
mehrere zweite Verbindungsleitungen (1.4a, 1.4b), die miteinander verbunden sind, eine Auslassleitung (C2) der mehreren Vorrichtungen (1) konfigurieren.

12. Vorrichtung nach Anspruch 11, bei der die Zuführungsleitung (C1), die Auslassleitung (C2) oder beide Leitungen (C1, C2) mindestens ein längliches Element (D) aufweisen, das zur Unterbringung und Ausrichtung in der Leitung (C1, C2) konfiguriert ist und entweder einen oder mehrere Schlitze oder auch mehrere Fenster (D.1, D.2) mit einer gemäß der Längsrichtung der Leitung (C1, C2) zunehmenden/abnehmenden Öffnungsfläche aufweist, wobei für jede Vorrichtung (1) ein anderer Durchgangsabschnitt für den Durchgang eines Wärmetauschfluids vorgesehen ist, um den Durchfluss des Fluids in jeder Vorrichtung (1) gemäß der Position der Vorrichtung (1) im Stapel einzustellen.

13. Vorrichtung nach Anspruch 12, wobei das längliche Element (D) entweder ein Rohr oder ein Kegel oder Kegelstumpf ist.

14. Vorrichtung nach Anspruch 12 oder 13, wobei das längliche Element (D) eine Platte mit C-förmigem Querschnitt ist.

15. Batterie, die aufweist:
mehrere gleichmäßig verteilte Zellen (C);
eine Vorrichtung nach einem der Ansprüche 11 bis 14;
wobei sich die Profile (1.1) der Vorrichtungen (1) der Austauschervorrichtung zwischen den Zellen (C) erstrecken, wobei die Zellen in thermischem Kontakt mit den Profilen (1.1) entweder durch die erste Platte (S1) oder durch die zweite Platte (S2) oder durch beide (S1, S2) stehen.

## Revendications

1. Dispositif d'échange de chaleur (1) pour des batteries, comportant :
- un profilé allongé (1.1) s'étendant selon une direction longitudinale (X-X'), comportant une pluralité de canaux (1.1.1) pour le passage d'un fluide d'échange de chaleur distribué selon une direction perpendiculaire (Y-Y') par rapport à la direction longitudinale (X-X'), les canaux (1.1.1) étant limités entre une première plaque (S1) et une seconde plaque (S2), la seconde plaque (S2) étant parallèle et agencée à l'opposé de la première plaque (S1), les canaux (1.1.1) étant délimités par des parois de liaison (W) s'étendant selon la direction longitudinale (X-X'), dans lequel le profilé (1.1) comporte :
au moins un premier groupe de canaux (G1) comportant un ou plusieurs canaux parmi les canaux (1.1.1) du profilé (1.1), et un second groupe de canaux (G2) comportant un ou plusieurs canaux parmi les canaux (1.1.1) du profilé (1.1) autres que ceux du premier groupe de canaux (G1),
une première ouverture (1.1.2) située à une première extrémité du profilé (1.1), configurée suivant une découpe traversante coupant transversalement le premier groupe de canaux (G1) et le second groupe de canaux (G2) et laissant au moins une paroi de liaison (W) aux deux extrémités du profilé (1.1) selon la direction perpendiculaire (Y-Y') non coupée,
une deuxième ouverture (1.1.3a) et une troisième ouverture (1.1.3b) situées à une seconde extrémité du profilé (1.1), à l'opposé de la première extrémité du profilé (1.1) selon la direction longitudinale (X-X'), dans lequel la deuxième ouverture (1.1.3a) est configurée suivant une découpe traversante coupant transversalement le premier groupe de canaux (G1), et la troisième ouverture (1.1.3b) est configurée suivant une découpe traversante coupant transversalement le second groupe de canaux (G2),
- une chambre déflectrice (1.2) située à la première extrémité du profilé (1.1) et configurée au moyen d'une plaque en forme de U fixée au moins à la première plaque (S1) et à la seconde plaque (S2), en engendrant une chambre de communication fluidique entre le premier groupe de canaux (G1) et le second groupe de canaux (G2),
- un premier conduit de raccordement (1.4a) et un second conduit de raccordement (1.4b), les deux conduits de raccordement (1.4a, 1.4b) étant tel que :
une première extrémité des deux conduits de raccordement (1.4a, 1.4b) est une extrémité configurée mâle (1.4.2),
une seconde extrémité des deux conduits de raccordement (1.4a, 1.4b) est une extrémité configurée femelle (1.4.1), étant adaptée pour être fluidiquement reliée à la première extrémité configurée mâle (1.4.2) d'un conduit de raccordement (1.4a, 1.4b) agencé consécutivement,
dans lequel les deux conduits de raccordement (1.4a, 1.4b) :
- comportent une fenêtre (1.4.3) située entre la première extrémité configurée mâle (1.4.2) et la seconde extrémité configurée femelle (1.4.1), et
- s'étendent selon une direction perpendiculaire (Z-Z') par rapport à la première plaque (S1) et à la seconde plaque (S2) de telle sorte que le premier conduit de raccordement (1.4a) est situé dans la deuxième ouverture (1.1.3a), et le second conduit de raccordement (1.4b) est situé dans la troisième ouverture (1.1.3b), et
dans lequel la fenêtre (1.4.3) du premier conduit de raccordement (1.4a) est en communication fluidique avec le premier groupe de canaux (G1) et la fenêtre (1.4.3) du second conduit de raccordement (1.4b) est en communication fluidique avec le second groupe de canaux (G2).

2. Dispositif selon la revendication 1, dans lequel la deuxième ouverture (1.1.3a) est limitée d'un premier côté par au moins une paroi de liaison (W) qui atteint la seconde extrémité du profilé (1.1), la troisième ouverture (1.1.3b) est limitée d'un second côté, opposé au premier côté selon la direction perpendiculaire (Y-Y'), par au moins une paroi de liaison (W) qui atteint la seconde extrémité du profilé (1.1), et la deuxième ouverture (1.1.3a) et la troisième ouverture (1.1.3b) sont agencées entre celles-ci avec au moins une paroi de liaison (W) située entre les deux ouvertures (1.1.3a, 1.1.3b).

3. Dispositif selon la revendication 1 ou 2, dans lequel la fenêtre (1.4.3) du premier conduit de raccordement (1.4a), la fenêtre (1.4.3) du second conduit de raccordement (1.4b) ou la fenêtre (1.4.3) des deux conduits de raccordement (1.4a, 1.4b) est/sont en communication fluidique avec le groupe de canaux (G1, G2) correspondant au moyen d'une chambre de distribution (1.3) située à la seconde extrémité du profilé (1.1) et configurée au moyen d'une plaque en forme de U, étant fixée au moins à la première plaque (S1) et à la seconde plaque (S2), en engendrant un espace de communication fluidique entre chaque conduit de raccordement (1.4a, 1.4b) du groupe de canaux (G1, G2) correspondant à celui-ci.

4. Dispositif selon l'une quelconque des revendications précédentes, dans lequel la plaque configurant la chambre déflectrice (1.2) a une extension (1.2.3) qui augmente la section de passage pour le passage d'un fluide entre le premier groupe de canaux (G1) et le second groupe de canaux (G2).

5. Dispositif selon l'une quelconque des revendications précédentes, dans lequel la chambre de distribution (1.3) a une extension (1.3.1) qui augmente la section de passage entre la fenêtre (1.4.3) du conduit de raccordement (1.4a, 1.4b) et l'entrée pour l'entrée du fluide d'échange dans le groupe de canaux (G1, G2) auquel ladite fenêtre (1.4.3) est fluidiquement reliée.

6. Dispositif selon la revendication 4 ou 5, dans lequel l'expansion (1.2.3) de la chambre déflectrice (1.2), l'expansion (1.3.1) de la chambre de distribution (1.3) ou les deux expansions (1.2.3, 1.3.1) sont orientées vers le côté où la première plaque (S1) est située, le côté où la seconde plaque (S2) est située, ou vers les deux côtés.

7. Dispositif selon l'une quelconque des revendications 1 à 6, dans lequel la deuxième ouverture (1.1.3a), la troisième ouverture (1.1.3b) ou les deux ouvertures (1.1.3a, 1.1.3b) configurent une fenêtre suivant un trajet fermé découpé dans le profilé (1.1).

8. Dispositif selon la revendication 3 et l'une quelconque des revendications 4 à 7, dans lequel la deuxième ouverture et/ou la troisième ouverture (1.1.3a, 1.1.3b) configurent un évidement suivant un trajet ouvert découpé dans le profilé (1.1), l'espace généré par l'évidement étant fermé à l'extrémité du profilé (1.1) au moyen de la plaque en forme de U formant la chambre de distribution (1.3).

9. Dispositif selon l'une quelconque des revendications précédentes, dans lequel la fenêtre (1.4.3) de l'un quelconque des conduits de raccordement (1.4a, 1.4b) comporte au moins un segment de renfort (1.4.4) entre un point situé dans le conduit mâle (1.4.2) et un point situé dans le conduit femelle (1.4.1), la fenêtre étant divisée en deux ouvertures ou plus.

10. Dispositif selon l'une quelconque des revendications précédentes, dans lequel le profilé (1.1) présente une ondulation selon la direction longitudinale X-X', configurée pour être adaptée à la surface extérieure d'une pluralité de cellules de batterie (C) configurées de façon cylindrique.

11. Appareil d'échange de chaleur pour une batterie, comportant une pluralité de dispositifs d'échange de chaleur (1) selon l'une quelconque des revendications précédentes, dans lequel :
- l'appareil est configuré sous la forme d'un empilement desdits dispositifs (1) au moyen du raccordement des premiers conduits de raccordement (1.4a) et des seconds conduits de raccordement (1.4b), les extrémités configurées mâles (1.4.2) étant raccordées aux extrémités configurées femelles (1.4.1) du conduit de raccordement (1.4a, 1.4b) situé au voisinage de celles-ci,
et dans lequel
- une première pluralité de conduits de raccordement (1.4a, 1.4b) raccordés les uns aux autres configurent un conduit d'alimentation (C1) de la pluralité de dispositifs (1), et
- une seconde pluralité de conduits de raccordement (1.4a, 1.4b) raccordés les uns aux autres configurent un conduit de sortie (C2) de la pluralité de dispositifs (1).

12. Appareil selon la revendication 11, dans lequel le conduit d'alimentation (C1), le conduit de sortie (C2) ou les deux conduits (C1, C2) comportent au moins un élément allongé (D) configuré pour être reçu et orienté dans le conduit (C1, C2) et comportant une ou plusieurs fentes ou bien une pluralité de fenêtres (D.1, D.2) avec une surface d'ouverture croissante/décroissante selon la direction longitudinale du conduit (C1, C2), une section de passage différente pour le passage d'un fluide d'échange de chaleur étant établie pour chaque dispositif (1) de manière à régler l'écoulement du fluide dans chaque dispositif (1) en fonction de la position dudit dispositif (1) dans l'empilement.

13. Appareil selon la revendication 12, dans lequel l'élément allongé (D) est un tube ou bien un cône ou un tronc de cône.

14. Appareil selon la revendication 12 ou 13, dans lequel l'élément allongé (D) est une plaque ayant une section en forme de C.

15. Batterie comportant :
- une pluralité de cellules (C) uniformément réparties,
- un appareil selon l'une quelconque des revendications 11 à 14,
dans laquelle les profilés (1.1) des dispositifs (1) de l'appareil d'échange s'étendent entre les cellules (C), lesdites cellules étant en contact thermique avec les profilés (1.1) par l'intermédiaire de la première plaque (S1) ou bien par l'intermédiaire de la seconde plaque (S2) ou bien par l'intermédiaire des deux (S1, S2).
